# EUROPÄISCHE PATENTSCHRIFT

(11) **EP 1 716 410 B1**
(45) Veröffentlichungstag und Bekanntmachung des Hinweises auf die Patenterteilung: **30.10.2019**
(21) Anmeldenummer: 05715280.3
(22) Anmeldetag: 10.02.2005
(51) Int. Cl.: G01N 21/95, G01B 11/30, G01B 11/24

(54) **VERFAHREN UND SYSTEM ZUR INSPEKTION VON OBERFLÄCHEN**
METHOD AND SYSTEM FOR INSPECTING SURFACES
PROCEDE ET DISPOSITIF POUR CONTRÔLER DES SURFACES

(30) Priorität: 18.02.2004 DE 102004007828
(43) Veröffentlichungstag der Anmeldung: 02.11.2006
(73) Patentinhaber: Isra Vision Systems AG, 64297 Darmstadt (DE)
(72) Erfinder: ERSÜ, Enis, 64297 Darmstadt (DE); AMELUNG, Jörg, 64297 Darmstadt (DE)
(74) Vertreter: Keil & Schaafhausen Patent- und Rechtsanwälte PartGmbB
(86) Internationale Anmeldenummer: PCT/EP2005/001310
(87) Internationale Veröffentlichungsnummer: WO 2005/090950

(56) Entgegenhaltungen:
- WO-A-87/00629
- DE-A1- 3 712 513
- DE-A1- 10 110 994
- DE-A1- 19 739 250
- US-A- 4 629 319

## Beschreibung

Die vorliegende Erfindung betrifft ein Verfahren zur Inspektion von Oberflächen eines dreidimensionalen Körpers gemäß der Präambel des Anspruchs 1, bei dem mindestens eine Kamera und mindestens eine Beleuchtungseinrichtung relativ zu der Oberfläche bewegt werden und während der Relativbewegung der Kamera zu der Oberfläche Bilder zu inspizierenden Bereiche der Oberfläche aufgenommen, an einen Rechner übertragen und dort ausgewertet werden, sowie ein entsprechendes System zur Inspektion von Oberflächen gemäß der Präambel des Anspruchs 12.

Bei dem dreidimensionalen Objekt kann es sich insbesondere um eine Karosse oder ein Karossenteil handeln. Die zu inspizierende Oberfläche ist in diesem Fall häufig eine lackierte Oberfläche oder eine blanke Blechoberfläche, deren Qualität überprüft werden soll. Bei der Inspektion sollen Fehler bzw. Fehlstellen, wie bspw. topologische Fehler, auf der Oberfläche durch eine optische Abtastung festgestellt werden. Die dazu verwendete Kamera kann eine beliebige optische Aufnahmeeinrichtung sein, die den jeweiligen Erfordernissen entspricht bzw. optimal an die zu untersuchende Oberfläche angepasst ist.

Ein ähnliches Inspektionssystem ist bspw. aus der US 5,142,648 bekannt, bei dem eine Vielzahl von Beleuchtungseinheiten und Kameras entlang einer Fertigungsstraße für PKWs angebracht sind, deren Signale in einer Recheneinheit ausgewertet werden. Bei diesem System besteht jedoch das Problem, dass das gesamte dreidimensionale Objekt nicht mit gleichbleibender Inspektionsqualität in allen zu inspizierenden Bereichen der Oberfläche untersucht werden kann, weil die Aufnahmebedingungen für die verschiedenen Bereiche zu unterschiedlich sind.

Ein ähnliches Inspektionssystem ist bspw. aus der US 5,142,648 bekannt, bei dem eine Vielzahl von Beleuchtungseinheiten und Kameras entlang einer Fertigungsstraße für PKWs angebracht sind, deren Signale in einer Recheneinheit ausgewertet werden. Bei diesem System besteht jedoch das Problem, dass das gesamte dreidimensionale Objekt nicht mit gleichbleibender Inspektionsqualität in allen zu inspizierenden Bereichen der Oberfläche untersucht werden kann, weil die Aufnahmebedingungen für die verschiedenen Bereiche zu unterschiedlich sind.

In der DE 197 39 250 C2 ist eine optische Erfassung von Freiformflächen mit einer Beleuchtungseinheit und einer Aufnahmeeinheit beschrieben, die in bestimmten räumlichen Konstellationen angeordnet werden, um Teilbereiche der Freiformfläche aufzunehmen. Dadurch können Oberflächenbereiche des Zielobjekts in einer geeigneten Weise aufgenommen werden, d.h. unter bestimmten optischen Vorgaben, wie reflexfrei oder im Glanzwinkel.

Die US 4,629,319 offenbart ein Verfahren zur Inspektion von Oberflächen, bei dem eine linienförmige Beleuchtung oberhalb einer Oberfläche angeordnet wird, um diese zu beleuchten. Durch eine Kamera werden Abweichungen dieser Linie aufgenommen. Die Abweichungen werden charakterisiert durch Bestimmung der Steigung oder der Position der Veränderungen der verzerrten Linie. Die zu untersuchende Oberfläche kann dabei unterhalb des Sensors durch bewegt werden. Alternativ kann der Sensor oberhalb der Oberfläche bewegt werden.

Aus der DE 101 10 994 A1 ist eine Vorrichtung zur Bildabtastung eines Objekts bekannt, bei der eine Kamera kontinuierlich in äquidistantem Abstand über der Objektoberfläche bewegbar ist. Als Beleuchtungseinrichtung können parallel zueinander angeordnete Leuchtstoffröhren verwendet werden. Dabei ist es möglich, dass ein Vergleich der Ergebnisse der Auswertung von Bildern im Hellfeld und im Dunkelfeld durchgeführt wird.

Aufgabe der vorliegenden Erfindung ist es, eine Möglichkeit zur Inspektion von Oberflächen vorzuschlagen, bei der eine Überprüfung aller zu inspizierenden Bereiche der Oberfläche mit gleichbleibender Qualität ermöglicht wird.

Diese Aufgabe wird bei einem Verfahren der eingangs genannten Art mit den Merkmalen des Anspruchs 1 gelöst. Auf diese Weise liegt von jedem der zu inspizierenden Bereiche mindestens eine Aufnahme vor, die von der Aufnahmesituation und -qualität her den übrigen Aufnahmen der anderen zu inspizierenden Bereichen gleich ist. Dadurch lässt sich eine hohe Inspektionsqualität gewährleisten. Dabei kann die einzuhaltende geometrische Relation für jede Inspektion entsprechend den jeweiligen Anforderungen vorgegeben werden. Ein Steuerungscomputer sorgt dafür, dass eine Inspektionseinheit mit Kamera und Beleuchtung und die bspw. auf der Karosse zu inspizierende Oberfläche in geeigneter Weise relativ zueinander bewegt werden. Besonders vorteilhaft ist es, wenn sowohl eine oder mehrere Inspektionseinheiten als auch das zu inspizierende Objekt selbst in aufeinander abgestimmter Weise bspw. durch einen gemeinsamen Steuerungsrechner angesteuert werden. Dann können auch während der Inspektion und der Bewegung des Objektes möglicherweise noch andere Arbeiten an dem Objekt durchgeführt werden. Dies ist besonders platzsparend und eignet sich daher besonders gut für komplizierte Produktions- oder Bearbeitungsstraßen, bei denen eine möglichst große Anzahl von Arbeiten auf möglichst kurzer Wegstrecke erledigt werden müssen. Die Aufnahmeposition kann insbesondere durch einen Winkel, unter dem die Aufnahme erfolgt, und/oder durch die Auflösung der Aufnahme bestimmt sein. Eine Auflösungssteuerung kann durch die Aufnahmeentfernung, durch die Auswahl der Brennweite von Kameraobjektiven oder dgl. erfolgen.

Die Relativbewegung zwischen Kamera, Beleuchtung und zu inspizierender Oberfläche kann dadurch erzeugt werden, dass das durch den dreidimensionalen Körper gebildete Objekt unabhängig von dem durch Kamera und Beleuchtungseinrichtung gebildeten optischen Systems bewegt, diese Bewegung gemessen und ggf. eine Bewegung des optischen Systems an die unabhängige Bewegung des Objektes angepasst wird. Diese Variante ist insbesondere dann vorteilhaft, wenn das erfindungsgemäße Inspektionssystem an eine bestehende Fertigungsstraße angepasst werden muss. Es ist möglich, Kameras und Beleuchtungseinrichtungen, die zu einer Inspektionseinheit zusammengefasst sein können, auch ortsfest auszubilden, wobei dann vorzugsweise mehrere verschiedene Inspektionseinheiten bzw. Kameras und Beleuchtungseinrichtungen an verschiedenen Positionen vorgesehen sind. Ferner kann die Relativbewegung auch dadurch hervorgerufen werden, dass das zu inspizierende Objekt ortsfest ist und sich die Kamera mit der Beleuchtungseinrichtung über das dreidimensionale Objekt bewegt, wobei auch eine Kombination der vorbeschriebenen Möglichkeiten denkbar ist. Dabei kann die Relativbewegung besonders einfach dann vorgegeben werden, wenn alle Bewegungseinrichtungen aufeinander synchronisiert sind. Dies ermöglicht auf einfache Weise eine Inspektion auch am bewegten Objekt, da die Relativbewegung von Kamera/Beleuchtung und Objekt aufeinander abgestimmt ist.

Dabei kann es vorteilhaft sein, mindestens eine Kamera und mindestens eine Beleuchtungseinrichtung zu einer Inspektionseinheit zusammen zu fassen und gemeinsam zu bewegen. Durch eine relativ fest vorgegebene Ausrichtung zwischen Kamera und Beleuchtungseinrichtung wird für jede Kameraausrichtung die gleiche Beleuchtungssituation erreicht. Die Bewegung der Inspektionseinheit erfolgt dann gesteuert in Abhängigkeit von der gemessenen Objektbewegung. Dabei kann eine Inspektionseinheit mehrere Kameras und/oder Lichtquellen aufweisen.

Erfindungsgemäß wird die Kamera, die Beleuchtungseinrichtung und die Oberfläche während der Inspektion für jeden zu inspizierenden Bereich zumindest für die Zeitdauer je einer Aufnahme in mehrere verschiedene, definierte geometrische Relationen zueinander gebracht werden. Da sich gewisse Oberflächenfehler nur in einer bestimmten Aufnahmeposition erkennen lassen, die von der Aufnahmeposition für einen anderen Fehlertyp verschieden sein kann, können auf diese Weise auch unterschiedliche Fehler zuverlässig erkannt werden.

Erfindungsgemäß kann die definierte geometrische Relation durch die Winkel zwischen der Oberfläche des zu inspizierenden Bereichs, der Beleuchtung und der Kamera und/oder den Abstand zwischen der Oberfläche des zu inspizierenden Bereichs und der Beleuchtung und/oder der Kamera bestimmt werden. Aus den bekannten Positionen des dreidimensionalen Körpers, der Beleuchtung und der Kamera kann der Steuercomputer diese Relationen für jeden zu inspizierenden Bereich feststellen und dabei einfach gewährleisten, dass für jeden zu inspizierenden Bereich der Oberfläche die definierte geometrische Relation zumindest einmal während der gesamten Inspektion eingehalten wurde.

Erfindungsgemäß werden je nach Krümmung der Oberfläche unterschiedlich große zu inspizierende Bereiche ausgewählt werden. Dies ist insbesondere dann von Vorteil, wenn die Krümmung so ausgebildet ist, dass eine eindeutige Fehlererkennung aufgrund der Krümmung nicht mehr möglich ist. In den meisten praktischen Fällen ist jedoch das gesamte Bild auswertbar.

Um die geometrische Relation für jeden zu inspizierenden Bereich einfach einstellen zu können, ist erfindungsgemäß vorgesehen, dass die Kamera, die Beleuchtungseinrichtung und/oder der Körper mit der zu inspizierenden Oberflä che je in einem oder mehreren Freiheitsgraden bewegbar sind. Vorzugsweise ist dafür mindestens eine Bewegungseinrichtung vorgesehen, an der Kamera, Beleuchtungseinrichtung und/oder Körper angebracht sind. Als Bewegungseinrichtung kommt bspw. ein Manipulator oder Handhabungsgerät oder eine mehrachsige Verfahreinheit mit linearen Verfahrachsen und/oder Drehachsen in Frage.

Je nach Struktur der zu inspizierenden Oberfläche kann die Beleuchtung der Beleuchtungseinrichtung diffus, gerichtet, strukturiert, als Dauerbeleuchtung und/oder als Blitzbeleuchtung erfolgen. Erfindungsgemäß ist die Beleuchtung eine abwechselnde Dunkel- und Hellfeldbeleuchtung und eine, vorzugsweise gerichtete, flächige Beleuchtung. Es ist auch möglich, geeignete Muster zu projizieren.

Um auch verschiedene Oberflächenfehler feststellen zu können, kann es erfindungsgemäß vorteilhaft sein, einen zu inspizierenden Bereich der Oberfläche mehrmals unter verschiedenen Beleuchtungssituationen und/oder mit unterschiedlichen Kameraeinstellungen aufzunehmen. Dabei kann die Kameraeinstellung sowohl die Ausrichtung der Kamera als auch Aufnahmeparameter, wie Blende, Verschlusszeit oder dgl., betreffen. Diese Parameter können vorzugsweise selbsttätig an verschiedene Oberflächeneigenschaften, wie bspw. Farbe, Reflexionsverhalten, angepasst werden. Entsprechendes gilt für die Art der Beleuchtung. Die Oberflächeneigenschaften werden dabei durch die Bildauswertung erkannt. Die Parameteranpassung erfolgt vorzugsweise automatisch und selbst lernend.

Nach einer besonders bevorzugten Ausführungsform des erfindungsgemäßen Verfahrens werden mehrere Kameras und mehrere Beleuchtungseinrichtungen zu mindestens zwei Teilsystemen zusammengefasst, die jeweils relativ zu der zu inspizierenden Oberfläche bewegbar sind, wobei die Teilsysteme über eine Kommunikationsschnittstelle miteinander verbunden sind und das Inspektionsergebnis durch Auswertung der Bilder mehrerer oder aller Teilsysteme erzeugt wird. Dabei besteht ein Teilsystem mindestens aus einer Kamera und einer Beleuchtungseinrichtung. Durch die Aufteilung in mehrere Teilsysteme kann ein dreidimensionaler Körper insgesamt schneller inspiziert werden, da zeitgleich verschiedene Bereiche aufgenommen und/oder verschiedene geometrische Relationen für einen zu inspizierenden Bereich erfüllt werden können.

Eine vorteilhafte Anwendung bildet bspw. die gleichzeitige Überwachung groß- und kleinflächiger Oberflächenbereiche. Dazu sind die Teilsysteme bestehend aus Kamera und Beleuchtungseinrichtung jeweils auf die spezielle Überwachungsaufgabe angepasst. Für kleinflächige Bereiche kann das System bspw. eine Beleuchtungseinrichtung und eine Kamera aufweisen. Für den großflächigen Bereich können mehrere nebeneinander angeordnete Kameras und Beleuchtungseinrichtungen in ein Teilsystem zusammengefasst werden, so dass durch dieses Teilsystem ein besonders großer zu inspizierender Bereich auf einmal abgedeckt werden kann. Dabei können die Teilsysteme teilweise eine Bewegungseinrichtung zur Bewegung der Teilsysteme aufweisen oder auch stationär neben dem bewegten Objekt angeordnet werden. Außerdem kann die Art der Kamera und der Beleuchtung von Teilsystem zu Teilsystem verschieden sein.

Das erfindungsgemäße Verfahren sieht nach der Aufnahme die Auswertung der aufgenommenen Bilder vorzugsweise mit Hilfe von auf einem Rechnersystem eingerichteten Bildauswertungsalgorithmen vor. Diese Bildauswertung ist prinzipiell bekannt. Dabei kann jedoch erfindungsgemäß vorgesehen werden, vorgebbare Strukturen von einer Erkennung als Fehler während der Inspektion auszunehmen. Bei einer Lackierung können Fehler bspw. durch während der Lackierung auf der Oberfläche befindliche Dreckpartikel oder durch Benetzungsprobleme der Oberfläche auftreten. Entsprechend der bei der Inspektion erkannten Strukturen werden die Fehler dann entsprechend klassifiziert, wodurch es möglich ist, bestimmte Fehler von einer Erkennung als Fehler während der Inspektion auszunehmen oder verschiedene Fehlerklassen vorzugeben. Durch die Bildauswertung können die Größe, der Kontrast, die Relation zwischen Größe und Kontrast, die Geometrie und Kontur, wie bspw. die Feststellung eines umschließenden Randes eines bestimmten Kontrastbereiches, und/oder die Anordnung des Fehlers im Hell- oder Dunkelfeld bei einer Hell-/ Dunkelfeldbeleuchtung ausgewertet werden. Dabei können die Bildauswertealgorithmen bspw. durch geeignete Auswahl von Algorithmen oder Parametrisierung an verschiedene Oberflächeneigenschaften angepasst werden.

Bei dem erfindungsgemäßen Verfahren wird die Relativposition zwischen der zu inspizierenden Oberfläche und der Kamera und/oder der Beleuchtungseinrichtung erfasst und die Bildaufnahme erfolgt gesteuert durch Auflösung, Position und/oder Zeit insbesondere in Abhängigkeit von der Relativposition. Durch diese bspw. mittels eines Steuerrechners vorgegebenen Steuerung kann besonders einfach sichergestellt werden, dass jeder zu inspizierende Bereich zur richtigen Zeit aufgenommen wird, d. h. wenn die Relativposition zwischen Körper, Kamera und Beleuchtung der vorgegebenen Relation entspricht.

Gemäß einer vorteilhaften erfindungsgemäßen Ausgestaltung kann die Relativposition zwischen Kamera und Objekt und/oder Beleuchtungseinrichtung durch eine sensorische Aufnahme erfasst werden. Diese Aufnahme wird durch die Bildauswertung analysiert. Daraus werden die jeweiligen Koordinaten und Positionen absolut und/oder relativ bestimmt. Anhand dieser automatisch ermittelten Positionen können Kamera, Objekt und/oder Beleuchtungseinrichtung dann selbsttätig ausgerichtet werden. Zur Objekterkennung können der Bildauswertung bspw. geometrische Merkmale oder das Aussehen der Oberfläche als Orientierungsmerkmale vorgegeben werden. Zusätzlich oder alternativ kann die Erfassung der Positionen auch mittels anderer Sensoren erfolgen.

Schließlich ist es möglich, unterschiedliche vorgegebene zu inspizierende Bereiche der Oberfläche mit unterschiedlichen Einstellungen in der geometrischen Relation, der Beleuchtungssituation und/oder in Bildverarbeitungsparametern zu inspizieren, wenn bspw. in den unterschiedlichen Bereichen verschiedene Fehler erkannt werden sollen. Dadurch können bspw. unterschiedliche Qualitätsbereiche festgelegt werden.

Die erfindungsgemäße Aufgabe wird ferner durch ein System zur Inspektion von Oberflächen eines dreidimensionalen Körpers gemäß Anspruch 12 gelöst, das zur Durchführung des vorbeschriebenen Verfahrens verwendet werden kann. Das System weist eine Kamera zur Aufnahme von Bildern der zu inspizierenden Bereiche der Oberfläche und mindestens eine Beleuchtungseinrichtung, mindestens eine Bewegungseinrichtung, welche die Kamera, die Beleuchtungseinrichtung und den Körper relativ zueinander bewegt und eine Auswerteeinrichtung zur Auswertung der aufgenommenen Bilder auf. Eine Steuereinrichtung des Systems ist erfindungsgemäß derart eingerichtet, dass die Kamera, die Beleuchtungseinrichtung und die Oberfläche während der Inspektion für jeden zu inspizierenden Bereich der Oberfläche zumindest für die Zeitdauer einer Aufnahme in mindestens einer definierten geometrischen Relation zueinander stehen und/oder gebracht werden. Dadurch können eine gleichbleibende Aufnahmequalität für jeden zu inspizierenden Bereich und eine hohe Erkennungsrate für Fehler erzielt werden.

Vorzugsweise sind mindestens eine Kamera und mindestens eine Beleuchtungseinrichtung in einer gemeinsamen Inspektionseinheit angeordnet, so dass die geometrische Relation zwischen der Kamera und der Beleuchtungseinrichtung innerhalb dieser Inspektionseinheit immer fest vorgegeben ist. Besonders vorteilhaft können auch mehrere Kameras pro Inspektionseinheit vorgesehen sein, deren optische Achsen möglicherweise verschieden ausgerichtet sind, um einen zu inspizierenden Bereich gleichzeitig unter verschiedenen Blickwinkeln aufnehmen zu können.

Ferner können erfindungsgemäß mehrere Kameras und Beleuchtungseinrichtungen bzw. Inspektionseinrichtungen jeweils getrennte Teilsysteme bilden, die jeweils mit der Auswerteeinrichtung und der Steuereinrichtung in Verbindung stehen. Durch die gleichzeitige Inspektion verschiedener Oberflächenbereiche kann die Zeit für die Inspektion deutlich reduziert werden. Dabei können die Teilsysteme auch insbesondere für unterschiedlich große Inspektionsbereiche geeignet sein.

In einer besonderen Ausführungsform des erfindungsgemäßen Systems sind mindestens ein stationäres und ein bewegliches Teilsystem vorgesehen.

Für das Feststellen der vorgegebenen geometrischen Relationen ist es erfindungsgemäß vorgesehen, dass die verwendeten Kameras dreidimensional kalibriert sind, so dass auch aus dem Kamerabild und einer bekannten Lage eines bekannten Objektes die relative Ausrichtung zwischen Kamera und Objekt ermittelt werden kann. Dabei ist die Kamera dann vorzugsweise in Bezug auf Beleuchtungseinrichtungen, Objekt und Bewegungseinrichtungen kalibriert, so dass die relativen Positionen jederzeit genau bekannt sind.

Nachfolgend wird die vorliegende Erfindung anhand eines Ausführungsbeispiels und der Zeichnung näher beschrieben. Dabei sind alle beschriebenen und/oder bildlich dargestellten Merkmale Teil der vorliegenden Erfindung, unabhängig von deren Zusammenfassung in den Ansprüchen oder deren Rückbezügen.

Es zeigen:
- Fig. 1: schematisch ein erfindungsgemäßes System zu Inspektion von Oberflächen eines dreidimensionalen Körpers in einer Aufsicht;
- Fig. 2: einen Teil des Systems gemäß Fig. 1 in der Seitenansicht und
- Fig. 3: typische Strukturen von Oberflächenfehlern.

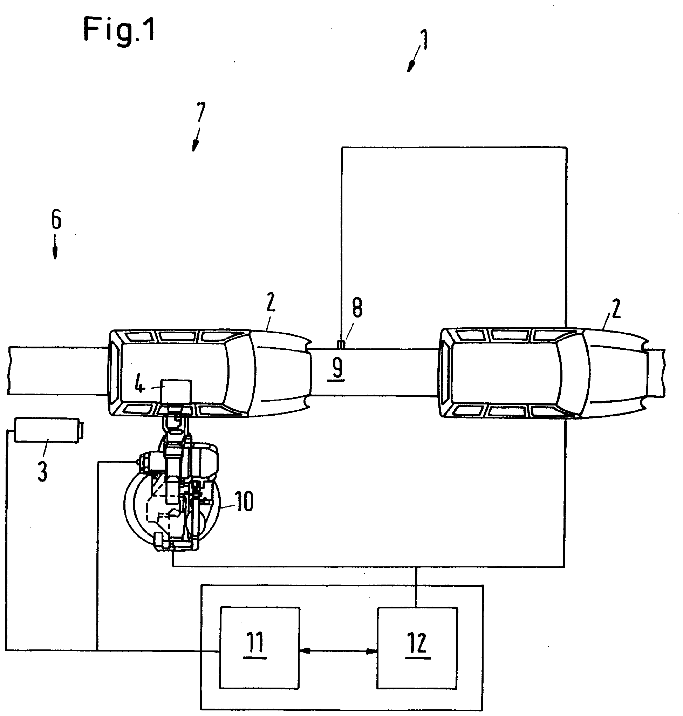

Das in Fig. 1 dargestellte System 1 zur Inspektion von Oberflächen eines dreidimensionalen Körpers 2 ist auf die Untersuchung einer lackierten Oberfläche von Karossen ausgerichtet. Allerdings ist das System nicht auf diese Anwendung beschränkt, sondern kann allgemein bei der Inspektion beliebiger Oberflächen verwendet werden.

Es weist mehrere Kameras und Beleuchtungseinrichtungen auf, die in mehreren, verteilt angeordneten Inspektionseinheiten 3 und 4 aufgeteilt sind. Dabei bilden die stationäre Inspektionseinheit 3 ein erstes Teilsystem 6 zur Untersuchung der Seiten der Karosse 2 und die Inspektionseinheit 4 ein zweites Teilsystem 7 zur Untersuchung der übrigen Flächenbereiche. Es ist durchaus möglich, weitere Teilsysteme vorzusehen und die Größe der Inspektionseinheiten an die jeweiligen Gegebenheiten anzupassen. Die Teilsysteme 6, 7 sind hintereinander entlang einer als Förderband ausgebildeten Bewegungseinrichtung 9 für die Karosse 2 angeordnet, so dass die Karosse 2 gegenüber der stationären Inspektionseinheit 3 und der bspw. klein- oder großflächigen Inspektionseinheiten 4 relativ bewegt wird. Zusätzlich ist die Inspektionseinheit 4 an einer der Inspektionseinheit 4 zugeordneten Bewegungseinrichtung 10 angebracht, die eine beliebige Orientierung der Inspektionseinheit 4 im Raum ermöglicht. Die Bewegungseinrichtung 10 ist dabei als Manipulator oder Handhabungsgerät ausgebildet, das eine Bewegung der Inspektionseinheit 4 in mehreren Freiheitsgraden um verschiedene Drehachsen erlaubt.

Durch die auf dem Förderband 9 bewegte Karosse 2 und durch die Bewegungseinrichtung 10 mit der Inspektionseinheit 4 wird eine Relativbewegung zwischen der Kamera und Beleuchtungseinrichtung der Inspektionseinheiten 3, 4 und dem Körper 2 erzeugt, wobei zu verschiedenen Zeitpunkten mit den Kameras der Inspektionseinheiten 3, 4 Bilder von den zu inspizierenden Bereichen der Oberfläche des dreidimensionalen Körpers 2 aufgenommen werden. Die aufgenommenen Bilder werden in einer Auswerteeinrichtung 11 mit Hilfe von Bildauswertungsalgorithmen analysiert.

Zur Koordinierung der Relativbewegung zwischen dem dreidimensionalen Objekt 2 und den Kameras und Beleuchtungseinrichtungen der Inspektionseinheiten 3, 4 ist eine Steuereinrichtung 12 vorgesehen, welche derart eingerichtet ist, dass die Kamera, die Beleuchtungseinrichtung und die Oberfläche während der Inspektion für jeden zu inspizierenden Bereich der Oberfläche des Körpers 2 zumindest für die Zeitdauer einer Aufnahme in mindestens einer definierten geometrischen Relation zueinander stehen. Dazu kennt die Steuereinrichtung 12 bspw. durch eine Messung mit einem Sensor 8 die Positionen des auf dem Förderband 9 bewegten Körpers 2 und der Inspektionseinheiten 3, 4. Die an der Bewegungseinrichtung 10 montierte Inspektionseinheit 4 kann auch durch die Steuereinrichtung 12 relativ zu der Position des Körpers 2 in eine vorgegebene Position gebracht werden, in der die definierte geometrische Relation zwischen der Oberfläche des Körpers 2 und der Kamera und Beleuchtungseinrichtung der Inspektionseinheit 4 erfüllt ist. Wenn diese Relation erfüllt ist, wird eine Aufnahme des zu inspizierenden Bereichs gemacht und die Aufnahme durch die Auswerteeinrichtung 11 ausgewertet.

Die Auswerteeinrichtung 11 und die Steuereinrichtung 12 können dabei als getrennte Rechner oder zusammengefasst in einem Rechnersystem realisiert sein.

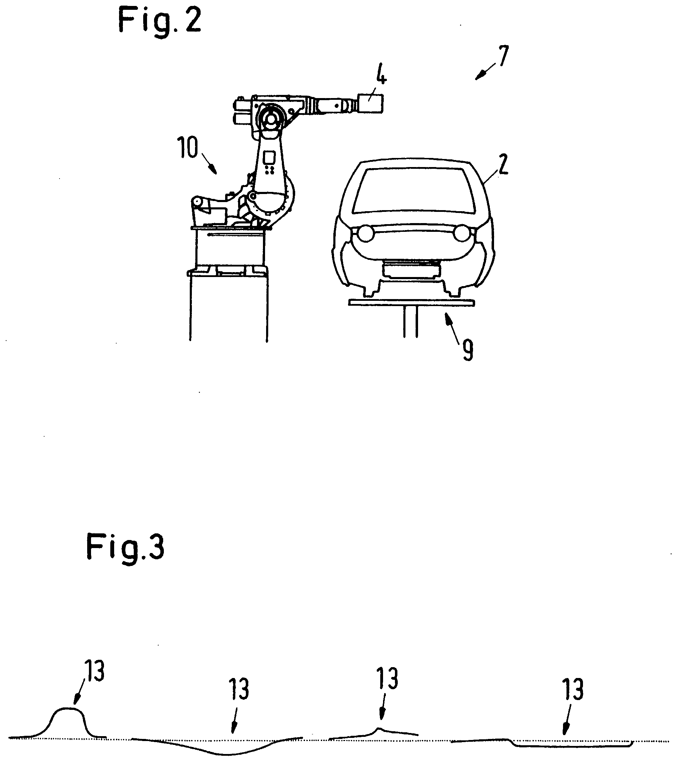

Fig. 2 zeigt eine an einer Bewegungseinrichtung 10, insbesondere einem Manipulator oder Handhabungsgerät, angebrachte Inspektionseinheit 4 in dem zweiten Teilsystem 7 des gesamten Systems 1 zur Inspektion von Oberflächen in einer Seitenansicht von vorne. Dabei kann die Inspektionseinheit 4 um verschiedene Drehachsen der Bewegungseinrichtung 10 frei im Raum positioniert werden, so dass für einen bestimmten Oberflächenbereich auf der Karosse 2 sowohl ein vorgegebener Abstand als auch eine vorgegebene Winkelrelation der Inspektionseinheit zu der Flächennormalen des zu inspizierenden Bereichs eingestellt werden können. Damit wird dann die definierte geometrische Relation erfüllt.

Prinzipiell ist die Untersuchung der Oberfläche auch mit nur einer im Raum frei bewegbaren Inspektionseinheit möglich. Die Aufteilung in mehrere Teilsysteme 6, 7, die an einem Förderband 9 des zu inspizierenden Körpers 2 angeordnet sind, ermöglicht jedoch ein zeitoptimiertes Arbeiten, da die Inspektionseinheiten 3, 4 zumindest teilweise zeitgleich arbeiten können, um verschiedene zu inspizierende Bereiche auf dem Körper 2 gleichzeitig abzuscannen. Die Relativbewegung zwischen dem Körper 2 und den Inspektionseinheiten 3, 4 wird dabei durch die Steuereinrichtung 12 koordiniert, so dass eine Synchronisation von bewegtem Objekt 2 und aller Bewegungseinrichtungen 9, 10 erfolgt. Die Teilsysteme 6, 7 sind dabei nicht auf zwei beschränkt, wobei auch jedes Teilsystem 6, 7 mehrere verschiedene Inspektionseinheiten aufweisen kann.

Anstelle der Inspektionseinheiten 3, 4, in denen eine Kamera und eine Beleuchtungseinrichtung zusammen angeordnet sind, ist es auch möglich, einzelne Beleuchtungseinrichtungen und einzelne Kameras beweglich oder stationär um den bewegbaren Körper herum so anzuordnen, dass die Kamera, die Beleuchtungseinrichtung und die Oberfläche während der Inspektion für jeden zu inspizierenden Bereich der Oberfläche für die Zeitdauer mindestens einer Aufnahme in einer definierten geometrischen Relation zueinander stehen. In diesem Fall wird die Aufgabe der Steuereinrichtung 12 vereinfacht, die Flexibilität des Systems 1 nimmt jedoch ab.

Eine Inspektionseinheit 3, 4 ist bspw. aus parallel angeordneten Röhren zur Beleuchtung und dazwischen vorgesehenen Kameras aufgebaut, mit denen der durch die Röhren ausgeleuchtete Bereich in Hell- und Dunkelfeldern überwacht werden kann. Es sind jedoch auch alle anderen Kombinationen von geeigneten Aufnahmeeinrichtungen als Kameras und geeigneten Beleuchtungseinrichtungen möglich.

Nachfolgend wird das Verfahren zur Inspektion von Oberflächen des dreidimensionalen Körpers 2 noch einmal detailliert beschrieben.

Während sich der dreidimensionale Körper 2 auf dem Förderband 9 fortbewegt, werden durch die Kameras und Beleuchtungseinrichtungen der Inspektionseinheiten 3, 4 jeweils verschiedene zu inspizierende Bereiche abgedeckt. Die Inspektionseinheit 4 kann dabei auch in eine gewünschte Position gebracht werden. Die Steuereinheit 12 kennt die Positionen sowohl des Körpers 2 als auch jeder der Inspektionseinheiten 3, 4 im Raum. Aus diesen bekannten Positionen ermittelt die Steuereinrichtung 12, ob die vorgegebene geometrische Relation zwischen der Kamera, der Beleuchtungseinrichtung und dem zu inspizierenden Bereich der Oberfläche gerade erfüllt ist. In diesem Fall gibt die Steuereinrichtung 12 einen Steuerungsbefehl zur Aufnahme und das aufgenommene Bild wird anschließend in der Auswerteeinrichtung 11 mit Hilfe von Bildauswertungsalgorithmen analysiert. Dabei können der Kontrast, die Größe, das Verhältnis zwischen Größe und Kontrast, die Geometrie und Kontur sowie die Anordnung im Hell- und Dunkelfeld bei einer Hell-/ Dunkelfeldbeleuchtung berücksichtigt werden. Dadurch ist es möglich, die wesentlichen topologischen Oberflächenfehler 13 in der Lackoberfläche auf der Karosse 2 zu detektieren. Derartige topologische Fehler 13 sind positive und/oder negative Verformungen auf der Solloberfläche, wie sie beispielhaft in Fig. 3 dargestellt sind. Die Oberflächenfehler 13 können durch Verschmutzung, Krater, Kocher, Nadelstiche, Nassabdruck, Kratzer oder dgl. sowie durch Benetzungsprobleme bei der Lackierung hervorgerufen werden.

Aus den bei der Bildauswertung erkannten Daten wird eine Klassifizierung der Fehler 13 vorgenommen. Anhand der Klassifikation der verschiedenen Fehler kann u.a. beurteilt werden, ob es sich um einen relevanten Fehler 13 handelt oder ob dieser Fehler 13 nicht weiter beachtet werden muss. So können bspw. leichte Unebenheiten, wie eine leichte Orangenhaut, in der Regel vernachlässigt werden. Als Kriterium dafür kann bspw. eine Mindestabweichung der Oberflächennormalen im Bereich des Fehlers von der den Fehler umgebenden Umgebung dienen. Dabei kann die Klassifizierung einstellbar, parametrierbar und/oder insbesondere selbsttätig lernend ausgebildet sein. Außerdem kann die Klassifizierung auch zwischen verschiedenen Fehlern bzw. Fehlertypen unterscheiden. Die Klassifizierung ist daher nicht auf eine Unterscheidung zwischen Fehler und Nicht-Fehler beschränkt.

Mit dem erfindungsgemäßen Verfahren und dem entsprechenden System 1, das insbesondere für die Durchführung des Verfahrens zur Inspektion von Oberflächen eines dreidimensionalen Körpers verwendet wird, ist es aufgrund der eindeutig vorgegebenen definierten geometrischen Relation zwischen der Oberfläche des Körpers 2 und der Kamera und der dieser Kamera zugeordneten Beleuchtungseinrichtung möglich, immer optimale Bedingungen für die Erkennung eines Fehlers auf der Oberfläche zu schaffen.

### Bezugszeichenliste:

- 1: System
- 2: dreidimensionaler Körper, Karosse
- 3: Inspektionseinheit
- 4: Inspektionseinheit
- 6: erstes Teilsystem
- 7: zweites Teilsystem
- 8: Sensor
- 9: Bewegungseinrichtung, Förderband
- 10: Bewegungseinrichtung, Manipulator oder Handhabungsgerät
- 11: Auswerteeinrichtung, Rechner
- 12: Steuereinrichtung, Rechner
- 13: Oberflächenfehler

## Patentansprüche

1. Verfahren zur Inspektion von Oberflächen eines dreidimensionalen Körpers (2), bei dem mindestens eine Kamera und mindestens eine Beleuchtungseinrichtung relativ zu der Oberfläche bewegt werden und während der Relativbewegung der Kamera zu der Oberfläche Bilder der zu inspizierenden Bereiche der Oberfläche aufgenommen, an einen Rechner (11) übertragen und dort ausgewertet werden, wobei die Kamera, die Beleuchtungseinrichtung und die Oberfläche während der Inspektion für jeden zu inspizierenden Bereich der Oberfläche zumindest für die Zeitdauer je einer Aufnahme in mehrere verschiedene, definierte geometrische Relationen zueinander gebracht werden, wobei in den dadurch erzeugten verschiedenen Aufnahmesituationen unterschiedliche Oberflächenfehler erkannt werden wobei die Beleuchtung eine flächige, abwechselnde Dunkel- und Hellfeldbeleuchtung ist und die mindestens eine Kamera dreidimensional kalibriert ist **dadurch gekennzeichnet dass** je nach Krümmung der Oberfläche unterschiedlich große zu inspizierende Bereiche ausgewählt werden.

2. Verfahren nach Anspruch 1, dass mindestens eine Kamera und mindestens eine Beleuchtungseinrichtung, die in einer Inspektionseinheit zusammengefasst sind, gemeinsam bewegt werden.

3. Verfahren nach Anspruch 1 oder 2, **dadurch gekennzeichnet, dass** die definierte geometrische Relation durch die Winkel zwischen der Oberflächennormalen des zu inspizierenden Bereichs, der Beleuchtung und der Kamera und/oder den Abstand zwischen der Oberfläche des zu inspizierenden Bereichs und der Beleuchtung und/oder der Kamera bestimmt wird.

4. Verfahren nach einem der vorhergehenden Ansprüche, **dadurch gekennzeichnet, dass** die Kamera, die Beleuchtungseinrichtung und/oder der Körper (2) mit der zu inspizierenden Oberfläche in einem oder mehreren Freiheitsgraden bewegbar sind.

5. Verfahren nach einem der vorhergehenden Ansprüche, **dadurch gekennzeichnet, dass** die Beleuchtung diffus, gerichtet, strukturiert, als Dauerbeleuchtung und/oder als Blitzbeleuchtung erfolgt.

6. Verfahren nach einem der vorhergehenden Ansprüche, **dadurch gekennzeichnet, dass** ein zu inspizierender Bereich der Oberfläche mehrmals unter verschiedenen Beleuchtungssituationen und/oder mit unterschiedlichen Kameraeinstellungen aufgenommen wird.

7. Verfahren nach einem der vorhergehenden Ansprüche, **dadurch gekennzeichnet, dass** mehrere Kameras und mehrere Beleuchtungseinrichtungen zu mindestens zwei Teilsystemen (6, 7) zusammengefasst werden, die jeweils relativ zu der zu inspizierenden Oberfläche bewegbar sind, wobei die Teilsysteme (6, 7) über eine Kommunikationsschnittstelle miteinander verbunden sind und das Inspektionsergebnis durch Auswertung der Bilder mehrerer oder aller Teilsysteme (6, 7) erzeugt wird.

8. Verfahren nach einem der vorhergehenden Ansprüche, **dadurch gekennzeichnet, dass** die Auswertung der aufgenommenen Bilder mit Hilfe von auf einem Rechnersystem eingerichteten Bildauswertungsalgorithmen erfolgt.

9. Verfahren nach Anspruch 8, **dadurch gekennzeichnet, dass** vorgebbare Strukturen von einer Erkennung als Fehler während der Inspektion ausgenommen werden.

10. Verfahren nach einem der vorhergehenden Ansprüche, **dadurch gekennzeichnet, dass** die Relativposition zwischen der zu inspizierenden Oberfläche und der Kamera und/oder der Beleuchtungseinrichtung erfasst wird und die Bildaufnahme gesteuert durch Auflösung, Position und/oder Zeit entsprechend der Relativposition erfolgt.

11. Verfahren nach einem der vorhergehenden Ansprüche, **dadurch gekennzeichnet, dass** vorgebbare zu inspizierende Bereiche der Oberfläche mit unterschiedlichen Einstellungen in der geometrischen Relation, der Beleuchtungssituation und/oder in Bildverarbeitungsparametern inspiziert werden.

12. System zur Inspektion von Oberflächen eines dreidimensionalen Körpers, zur Durchführung des Verfahrens nach einem der Ansprüche 1 bis 11, mit mindestens einer Kamera zur Aufnahme von Bildern der zu inspizierenden Bereiche der Oberfläche, mit mindestens einer Beleuchtungseinrichtung, mit mindestens einer Bewegungseinrichtung (9, 10), welche die Kamera, die Beleuchtungseinrichtung und den Körper (2) relativ zueinander bewegt, und mit einer Auswerteeinrichtung (11) zu Auswertung der aufgenommenen Bilder, und mit einer Steuereinrichtung (12), welche derart eingerichtet ist, dass die Kamera, die Beleuchtungseinrichtung und die Oberfläche während der Inspektion für jeden zu inspizierenden Bereich der Oberfläche zumindest für die Zeitdauer je einer Aufnahme zum Erkennen unterschiedlicher Oberflächenfehler in mehreren verschiedenen geometrischen Relationen zueinander stehen wobei die Beleuchtung der Beleuchtungseinrichtung eine flächige, abwechselnde Dunkel- und Hellfeldbeleuchtung ist und die mindestens eine Kamera dreidimensional kalibriert ist, und die zu inspizierenden Bereiche je nach Krümmung der Oberfläche unterschiedlich groß gewählt sind.

13. System nach Anspruch 12, **dadurch gekennzeichnet, dass** mindestens eine Kamera und mindestens eine Beleuchtungseinrichtung in einer gemeinsamen Inspektionseinheit (3, 4) angeordnet sind, in welcher sie gemeinsam bewegbar sind.

14. System nach Anspruch 12 oder 13, **dadurch gekennzeichnet, dass** mehrere Kameras und Beleuchtungseinrichtungen bzw. Inspektionseinheiten (3, 4) jeweils getrennte Teilsysteme (6, 7) bilden.

15. System nach Anspruch 14, **dadurch gekennzeichnet, dass** mindestens ein stationäres (6) und ein bewegliches (7) Teilsystem vorgesehen sind.

16. System nach einem der Ansprüche 12 bis 15, **dadurch gekennzeichnet, dass** die Kameras in Bezug auf Beleuchtungseinrichtungen, Objekt und/oder Bewegungseinrichtungen kalibriert sind.

## Claims

1. Method for inspecting surfaces of a three-dimensional body (2) in which at least one camera and at least one lighting device are moved relative to the surface and during the movement of the camera relative to the surface, images of the areas of the surfaces to be inspected are taken, transmitted to a computer (11) and evaluated there, wherein during the inspection, for each area of the surface to be inspected, the camera, the lighting device and the surface are brought into several different, defined geometric relationships with regard to each other, wherein in the thereby produced different recording situations, different surface defects can be detected, wherein the lighting is two-dimensional, alternating dark and light field lighting and the at least one camera is three-dimensionally calibrated, **characterised in that** depending on the curvature of the surface, areas to be inspected of different sizes are selected.

2. Method according to claim 1 **characterised in that** at least one camera and at least one lighting device, which are combined into one inspection unit, are jointly moved.

3. Method according to claim 1 or 2 **characterised in that** the defined geometric relationship is defined by the angle between the surface normal of the area to the inspected, the lighting and the camera and/or the distance between the surface of the area to be inspected and the lighting and/or the camera.

4. Method according to any one of the preceding claims **characterised in that** the camera, the lighting device and/or the body (2) with the area to be inspected are movable in one or more degrees of freedom.

5. Method according to any one of the preceding claims **characterised in that** the lighting takes place in a diffused, directed, structured manner as permanent lighting and/or as flash lighting.

6. Method according to any one of the preceding claims **characterised in that** an area of the surface to be inspected is recorded several times in various lighting situations and/or with different camera settings.

7. Method according to any one of the preceding claims **characterised in that** several cameras and several lighting devices are combined into a least two partial systems (6, 7), wherein they are movable relative to the surface to be inspected, wherein the partial systems (6, 7) are connected to each other via a communications interface and the inspection result is produced through evaluation of the images of several or all partial systems (6, 7).

8. Method according to any one of the preceding claims **characterised in that** the evaluation of the recorded images takes place by way of image evaluation algorithms set up on a computer system.

9. Method according to claim 8 **characterised in that** the pre-definable structures are exempted from being detected as errors during the inspection.

10. Method according to any one of the preceding claims **characterised in that** the relative position between the surface to be inspected and the camera and/or the lighting device is recorded and the image is recorded controlled by resolution, position and/or time in accordance with the relative position.

11. Method according to any one of the preceding claims **characterised in that** definable areas of the surface to be inspected are inspected with different settings in the geometric relationship, lighting situation and/or image processing parameters.

12. System for inspecting surfaces of a three-dimensional body for implementing the method according to any one of claims 1 to 11 with a least one camera for recording images of the areas of the surface to be inspected, with at least one lighting device, with a least one moving device (9, 10) which moves the camera, the lighting device and the body (2) relative to each other, and with an evaluation device (11) for evaluating the recorded images and with a control device (12) which is set up in such a way that during the inspection, for each area of the surface to be inspected, the camera, the lighting device and the surface are positioned in several different geometric relationships with regard to each other for at least the duration of each image in order to detect various surface defects, wherein the lighting of the lighting device is two-dimensional alternating dark and light field lighting and the at least one camera is three-dimensionally calibrated and, depending on the curvature of the surface, the areas to be inspected are selected to be of different sizes.

13. System according to claim 12 **characterised in that** at least one camera and at least one lighting device are arranged in a joint inspection unit (3, 4) in which they are jointly moveable.

14. System according to claim 12 or 13 **characterised in that** several cameras and lighting systems and/or inspection units (3, 4) each form separate partial systems (6, 7).

15. System according to claim 14, **characterised in that** at least one stationary (6) and one movable (7) system are provided.

16. System according to any one of claims 12 to 15 **characterised in that** the cameras are calibrated in relation to lighting devices, object and/or moving devices.

## Revendications

1. Procédé d'inspection de surface d'un corps tridimensionnel (2), dans lequel au moins une caméra et au moins un dispositif d'éclairage sont déplacés par rapport à la surface et, pendant le mouvement relatif de la caméra par rapport à la surface, des images des zones inspectées de la surface sont enregistrées, transférées à un calculateur (11) et y sont exploitées, et la caméra, le dispositif d'éclairage et la surface sont amenés, pendant l'inspection, pour chaque zone à inspecter de la surface, au moins pour la durée d'une prise de vue, à établir plusieurs différentes relations géométriques définies les uns par rapport aux autres, différents défauts de surface étant détectés dans les différentes situations de prise de vue ainsi générées, l'éclairage étant un éclairage superficiel à champ sombre et clair alternants et l'au moins une caméra étant étalonnée en trois dimensions, **caractérisé en ce que**, en fonction de la courbure de la surface, des zones inspectées de tailles différentes sont sélectionnées.

2. Procédé selon la revendication 1, **caractérisé en ce qu'**au moins une caméra et au moins un dispositif d'éclairage qui sont regroupés en une unité d'inspection sont déplacés ensemble.

3. Procédé selon la revendication 1 ou 2, **caractérisé en ce que** la relation géométrique définie est définie par les angles entre les normales de surface de la zone à inspecter, de l'éclairage et de la caméra et/ou la distance entre la surface de la zone à inspecter et l'éclairage et/la caméra.

4. Procédé selon une des revendications précédentes, **caractérisé en ce que** la caméra, le dispositif d'éclairage et/ou le corps (2) de la surface à inspecter sont mobiles dans le cadre d'un ou plusieurs degrés de liberté.

5. Procédé selon une des revendications précédentes, **caractérisé en ce que** l'éclairage se fait de manière diffuse, dirigée, structurée, sous forme d'un éclairage continu et/ou d'un éclairage intermittent.

6. Procédé selon une des revendications précédentes, **caractérisé en ce qu'**une zone à inspecter de la surface est enregistrée plusieurs fois dans différentes situations d'éclairage et/ou avec divers réglages de la caméra.

7. Procédé selon une des revendications précédentes, **caractérisé en ce que** plusieurs caméras et plusieurs dispositifs d'éclairage sont regroupés en au moins deux sous-systèmes (6, 7) qui sont respectivement mobiles par rapport à la surface à inspecter, les sous-systèmes (6, 7) étant connectés entre eux par une interface de communication et le résultat de l'inspection étant généré par exploitation des images de plusieurs ou de la totalité des sous-systèmes (6, 7) .

8. Procédé selon une des revendications précédentes, **caractérisé en ce que** l'exploitation des images enregistrées se fait à l'aide d'algorithmes d'exploitation d'images installés sur un système de calculateur.

9. Procédé selon la revendication 8, **caractérisé en ce que** des structures prescriptibles sont enregistrées en tant que défauts par un système de détection pendant l'inspection.

10. Procédé selon une des revendications précédentes, **caractérisé en ce que** la position relative entre la surface à inspecter et la caméra et/ou le dispositif d'éclairage est détectée et la prise de vue se fait en exerçant un contrôle par la définition, la position et/ou le temps en fonction de la position relative.

11. Procédé selon une des revendications précédentes, **caractérisé en ce que** les zones prescriptibles à inspecter de la surface sont inspectées avec différents réglages de relation géométrique, situation d'éclairage et/ou de paramètres de traitement d'images.

12. Système d'inspection de surface d'un corps tridimensionnel pour la réalisation du procédé selon une des revendications 1 à 11, comportant au moins une caméra pour l'enregistrement d'images des zones à inspecter de la surface, un dispositif d'éclairage, au moins un dispositif de déplacement (9,10) qui déplace la caméra, le dispositif d'éclairage et le corps (2) les uns par rapport aux autres, et un dispositif d'exploitation (11) pour exploiter les images enregistrées, et un dispositif de commande (12) qui est conçu pour que la caméra, le dispositif d'éclairage et la surface, pendant l'inspection pour chaque zone à inspecter de la surface, au moins pour la durée d'une prise de vue permettant de détecter différents défauts de surface, présentent entre eux plusieurs relations géométriques différentes, l'éclairage du dispositif d'éclairage étant un éclairage superficiel à champ sombre et clair alternant et l'au moins une caméra étant étalonnée en trois dimensions et les zones à inspecter étant sélectionnées en tailles différentes en fonction de la courbure de la surface.

13. Système selon la revendication 12, **caractérisé en ce qu'**au moins une caméra et au moins un dispositif d'éclairage sont disposés dans une unité d'inspection commune (3, 4) dans laquelle ils sont mobiles ensemble.

14. Système selon la revendication 12 ou 13, **caractérisé en ce que** plusieurs caméras et dispositifs d'éclairage ou unités d'inspection (3, 4) constituent des sous-systèmes (6, 7) respectivement séparés.

15. Système selon la revendication 14, **caractérisé en ce qu'**au moins un sous-système stationnaire (6) et un mobile (7) sont prévus.

16. Système selon une des revendications 12 à 15, **caractérisé en ce que** les caméras sont étalonnées en référence au dispositif d'éclairage, à l'objet et/ou au dispositif de déplacement.
